# EUROPEAN PATENT APPLICATION

(11) **EP 2 648 025 A1**
(43) Date of publication of application: **09.10.2013**
(21) Application number: 12162878.8
(22) Date of filing: 02.04.2012
(51) Int. Cl.: G02B 6/13

(54) **A process for manufacturing a photonic circuit**

(71) Applicant: Caliopa NV, 9052 Zwijnaarde (BE)
(72) Inventor: Collins, Tom, 9051 Sint-Denijs-Westrem (BE)
(74) Representative: Plas, Axel Ivo Michel

(57) **Abstract**

The invention concerns a process for manufacturing a photonic circuit comprising:
- manufacturing on a first wafer (301) a high quality waveguide layer (303) with refractive index above 1.8;
- annealing the high quality waveguide layer (303);
- manufacturing a second wafer (311);
- manufacturing on the first or second wafer a Distributed Bragg Reflector (312) by deposition of alternating layers of different refractive index materials through a Chemical Vapor Deposition or CVD process;
- manufacturing on the first or second wafer an underclad layer (305) of at least 1,5 micron of a material with refractive index below 1.5; and
- transferring and bonding the first wafer with high quality waveguide layer (303) onto the second wafer.

The process further comprises patterning the high quality waveguide layer (303) and manufacturing an overclad layer (302) either before or after the bonding of the wafers.

## Description

### Field of the Invention

The present invention generally relates to the manufacturing of a photonic circuit that on the one hand contains a high quality, high refractive index contrast waveguide layer, i.e. a layer with refractive index above 1.8, and on the other hand contains a buried Distributed Bragg Reflector or DBR, both separated by a material with refractive index below 1.5 that serves as an underclad layer for the waveguide. The high quality waveguide, underclad and buried DBR together form a platform for designing diffractive coupling gratings that couple light vertically in/out of the high quality waveguide with minimal amount of light lost to the substrate of the photonic circuit. The invention in particular aims at providing a cost efficient solution for manufacturing such a photonic circuit, that does not detract from the quality of the waveguide.

### Background of the Invention

In applications where light must be coupled vertically or nearly vertically into or out of a waveguide using diffractive coupling gratings, the amount of light lost in the substrate must be minimized using a manufacturing process that remains cost-effective without detracting from the quality of the waveguide layer. It is well known that a buried Distributed Bragg Reflector or buried DBR can help minimise optical losses to the substrate, but prior art manufacturing methods are not cost effective and/or make it difficult to fabricate a high quality waveguide on top of a structure combining a buried DBR with an underclad layer. Alternative methods to reduce light lost to the substrate place restrictions on design of the diffractive grating which makes it difficult to achieve low optical coupling losses for other reasons.

The article "A High-Efficiency Out-Of-Plane Fibre Coupler for Coupling to High Index Contrast Waveguides" from the authors D. Taillaert, W. Bogaerts, P. Bienstman, T.F. Kraus, I. Moerman, P. Van Daele and R. Baets, published in 2001 in ECOC 01, pages 30-31, for instance describes growing the buried DBR through epitaxy which is a very expensive process and not relevant if silicon is used as material for the base wafer.

Alternatively, the article "Silicon Substrates with Buried Distributed Bragg Reflectors for Resonant Cavity-Enhanced Optoelectronics" from the authors M.K. Emslay, O. Dosunmu, and M.S. Unlu, published in Selected Topics in Quantum Electronics, IEEE Journal of Jul/Aug. 2002, Vol. 8, Issue 4, pages 948-955, describes the formation of a buried DBR using the SOITEC SMARTCUT technique multiple times. Again, this is a very expensive process, and not useful for photonic integrated circuits or PICs.

According to yet another alternative method to reduce optical losses to the substrate, described in the article "High Efficiency Silicon-In-Insulator Grating Coupler Based on a Poly-Silicon Overlay" from the authors G. Roelkens, D. Van Thourhout and R. Baets, published in 2006 in Optics Express, 14(24), pages 11622-11630, the use of a raised coupler grating by adding an overlay has been explored as a way to achieve a high coupling efficiency without using a DBR. This prior art process however adds two extra mask steps. In addition, the design makes it difficult to combine with methods to modify the beam profile from an exponential decay with length to better match the Gaussian mode profile of the fiber or VCSEL (Vertical-Cavity Surface-Emitting Laser) which should be optically coupled to the waveguide.

A high quality waveguide requires a film with refractive index above 1.8 and excellent uniformity of both thickness (e.g. less than 4 % variation) and refractive index (e.g. less than 1 % variation). For instance, if the material that is chosen for the waveguide is silicon nitride, then this layer can be fabricated using Low Pressure Chemical Vapour Deposition or LPCVD, a high temperature process that takes place at temperatures above 750 °C. To achieve excellent refractive index control stoichiometric, silicon nitride is chosen. Unfortunately, the deposited film exhibits high stress, typically above 1 GigaPascal (GPa), making it difficult to deposit films above 300 nanometers thick. One option is to make the silicon nitride film "silicon rich" to reduce stress but typically the control of refractive index becomes much worse. Stress in a stoichiometric silicon nitride film can be reduced using high temperature anneals before and/or after the film is patterned. These anneals take place at temperatures above 1000 °C. These high temperatures however may bring damage to a sensitive structure like the buried DBR. In addition, the combination of the underclad layer that is present above the buried DBR - typically a relatively thick CVD oxide - and the LPCVD deposited silicon nitride layer may lead to wafer bowing and/or cracks in the layer during the heating and cooling cycles.

Alternatively, if silicon nitride were chosen as material for the waveguide layer, it could be deposited relatively easily using a Plasma Enhanced Chemical Vapour Deposition or PECVD process. Such films however typically have poor control of the refractive index and uniformity and contain enough hydrogen to increase propagation losses in the telecom wavelength range, i.e. around 1520 nm. Thus, no high quality waveguide layer with refractive index above 1.8 can be guaranteed this way.

It is an objective of the present invention to resolve the shortcomings of the above mentioned prior art solutions. More particularly, it is an objective to disclose a process for manufacturing a photonic circuit containing a high quality waveguide layer and a buried DBR, that is cost-effective, does not detract from the quality of the waveguide layer, minimizes the risks for causing cracks in the waveguide or excessive wafer bow, and as such enables fabrication of low loss diffractive coupling gratings for vertically coupling light into and out of the high quality waveguide layer .

### Summary of the Invention

According to the present invention, the above defined objectives are realized through a process as defined by claim 1, comprising:
- manufacturing a first layer stack on a first wafer, said first layer stack comprising a high quality waveguide layer, i.e. a waveguide layer of a material with refractive index above 1.8;
- annealing said high quality waveguide layer;
- manufacturing a second layer stack on a second wafer;
- manufacturing as part of the first layer stack or as part of the second layer stack a Distributed Bragg Reflector by deposition of alternating layers of different refractive index materials through a Chemical Vapor Deposition or CVD process;
- manufacturing as part of the first layer stack or as part of the second layer stack an underclad layer for the high quality waveguide layer by deposition of a layer with a thickness of at least 1,5 micron of a material with refractive index below 1.5;
- transferring the first layer stack onto the second wafer and bonding the first layer stack and the second layer stack;
- manufacturing either before or after the bonding an overclad layer for the high quality waveguide layer by deposition of a layer with a thickness of at least 1.5 micron of a material with refractive index below 1.5; and
- patterning the high quality waveguide layer either before or after the bonding.

Thus, the invention utilizes chemical vapor deposition or CVD to fabricate the buried DBR. The thickness and refractive index control of state of the art CVD equipment is sufficiently good to deposit the alternating layers of silicon nitride and silicon dioxide, or alternatively silicon and silicon dioxide, or other alternating layers of different refractive index materials. Thus, according to the invention, the DBR is manufactured using a cost-efficient technology with equipment that is readily available in CMOS facilities. Similarly, the underclad layer, typically manufactured in silicon dioxide, can be deposited using CVD equipment readily available in CMOS facilities.

Deposition of a monocrystalline silicon layer above the CVD based DBR and underclad layer is not possible. If silicon nitride is chosen for the waveguide layer, this layer could be relatively easily deposited using a Plasma Enhanced Chemical Vapor Deposition or PECVD process. Such films however have poor control of the refractive index and uniformity and contain sufficient hydrogen to increase propagation losses in the telecom wavelength range, i.e. around 1520 nanometer. Using LPCVD as technology to deposit a silicon nitride on top of the CVD based DBR and underclad layer is difficult due to the high temperature of the deposition and the inherent stress in the film. As explained already, an underclad layer is required and this is typically a relatively thick oxide layer, i.e. more than 1.5 micron for applications using TE mode only or more than 3 micron for applications where the waveguide will guide both TE and TM modes. The combination of such a relatively thick oxide, and the LPCVD nitride layer typically deposited at temperatures above 780 °C, can lead to cracks in the layer at thicknesses above 200 à 300 nanometer. Additionally, if the silicon nitride layer would be deposited directly on top of the buried DBR with thick oxide layer, the high temperatures required to properly anneal the film can increase the stress in the underclad layer causing the wafer to bow and possibly break.

The manufacturing process according to the invention resolves these problems by manufacturing the high quality, high refractive index waveguide layer without any DBR or undercladding layer being present. The process uses a second silicon wafer. The DBR and underclad layer are either deposited on the first wafer after the high temperature processing (LPCVD and annealing) has taken place or on the second wafer. A wafer bonding step is then used to combine the first wafer holding at least the high quality waveguide layer with the second wafer. Following removal of excess silicon from the first wafer, the structure that remains consists of a high quality waveguide layer with buried DBR and underclad layer underneath.

In a first embodiment of the manufacturing process according to the invention, defined by claim 2, silicon nitride is chosen as material for the high quality waveguide layer, and manufacturing the high quality waveguide layer further comprises:
- depositing a silicon nitride layer through Low Pressure Chemical Vapor Deposition or LPCVD.

Indeed, in a preferred embodiment of the invention, the high quality waveguide layer is stoichiometric silicon nitride. In this embodiment, SiN is deposited through LPCVD and subsequently annealed to drive out hydrogen to improve optical losses around 1520 nm and to reduce stress in the film. Thanks to the SiN first approach, a high quality, uniform film with a thickness exceeding 200 nanometer can be deposited using an LPCVD process without cracks. In fact films up to 600 nanometers can at present be successfully fabricated. The annealing is done at a temperature of 1150 °C to drive out hydrogen and to reduce stress in the silicon nitride layer. Next, the waveguide layer may be patterned and properly planarized. Alternatively, the patterning and planarizing may take place later, after bonding. Then a silicon dioxide layer is deposited by a standard CVD process to form the underclad layer. This underclad layer is needed to reduce optical losses to the substrate. Then, the DBR layers are deposited. The DBR layers may be deposited either on the first wafer holding the high quality waveguide layer, or on the second wafer. In a preferred embodiment CVD amorphous or polysilicon layers are alternated with CVD deposited silicon dioxide layers. The final layer is chosen to be silicon dioxide to facilitate low temperature wafer bonding. Next, the second silicon wafer covered in a thin silicon dioxide layer (possibly representing the top layer of the DBR) is bonded to the support wafer, i.e. the first wafer. The support wafer hence only serves as a donor substrate to enable the high quality waveguide layer to be fabricated before the undercladding and DBR are fabricated. Although this preferred embodiment uses SiN as material for the waveguide layer, application of the present invention obviously is not limited to usage of a particular material for the high quality waveguide layer. Other materials like for instance silicon oxynitride, silicon carbide, tantalum pentoxide (Ta₂O₅) or tellurium dioxide (TeO₂) may also require high temperature processing in order to serve as material for a high quality waveguide layer, in which case the current invention may be applied as well.

In another embodiment of the process for manufacturing a photonic circuit according to the invention, defined by claim 3, silicon is chosen as material for the high quality waveguide layer, and transferring it onto the layer stack comprising said Distributed Bragg Reflector comprises the SOITEC SMARTCUT technique.

Indeed, the SOITEC SMARTCUT technique enables to manufacture a high quality monocrystalline silicon waveguide layer. This high quality silicon waveguide can again be transferred onto a CVD based DBR manufactured as part of a second wafer, in order to provide a cost-effective platform for a low loss diffractive grating. Alternatively, the CVD based DBR may be manufactured above the high quality waveguide layer on the first wafer.

According to an optional aspect of the process for manufacturing a photonic circuit according to the present invention, defined by claim 4, the overclad layer may be manufactured before the bonding as part of the first layer stack.

An advantage thereof is that also patterning is done before bonding, and annealing can be done after patterning the waveguide and before bonding. The annealing therefore will be more efficient.

According to another optional aspect of the process for manufacturing a photonic circuit according to the present invention, defined by claim 5, the patterning of the high quality waveguide layer may be executed after the bonding and the overclad layer may be manufactured after the bonding and after the patterning.

An advantage thereof is that the bonding can be done on unpatterned wafers which is significantly easier.

According to yet another optional aspect of the process for manufacturing a photonic circuit according to the present invention, defined by claim 6, the patterning of the high quality waveguide layer may be executed before the bonding whereas the overclad layer may be manufactured after the bonding.

Just like the embodiments defined by claim 4, the annealing can be done after patterning the waveguide and before bonding. The annealing therefore will be more efficient.

In addition to a process for manufacturing a photonic circuit, the present invention also relates to a corresponding photonic circuit manufactured in accordance with the process. Such photonic circuit is defined by claim 7.

### Brief Description of the Drawings

Fig. 1A-1I illustrate the steps of a first embodiment of the manufacturing process according to the present invention;

Fig. 2A-2H illustrate the steps of a second embodiment of the manufacturing process according to the present invention;

Fig. 3A-3H illustrate the steps of a third embodiment of the manufacturing process according to the present invention;

Fig. 4A-4H illustrate the steps of a fourth embodiment of the manufacturing process according to the present invention;

Fig. 5A-5H illustrate the steps of a fifth embodiment of the manufacturing process according to the present invention;

Fig. 6A-6G illustrate the steps of a sixth embodiment of the manufacturing process according to the present invention;

Fig. 7A-7J illustrate the steps of a seventh embodiment of the manufacturing process according to the present invention;

Fig. 8A-8I illustrate the steps of an eight embodiment of the manufacturing process according to the present invention; and

Fig. 9A-9I illustrate the steps of a ninth embodiment of the manufacturing process according to the present invention.

### Detailed Description of Embodiment(s)

With reference to the drawings, several embodiments of the manufacturing process according to the invention are described in the following paragraphs.

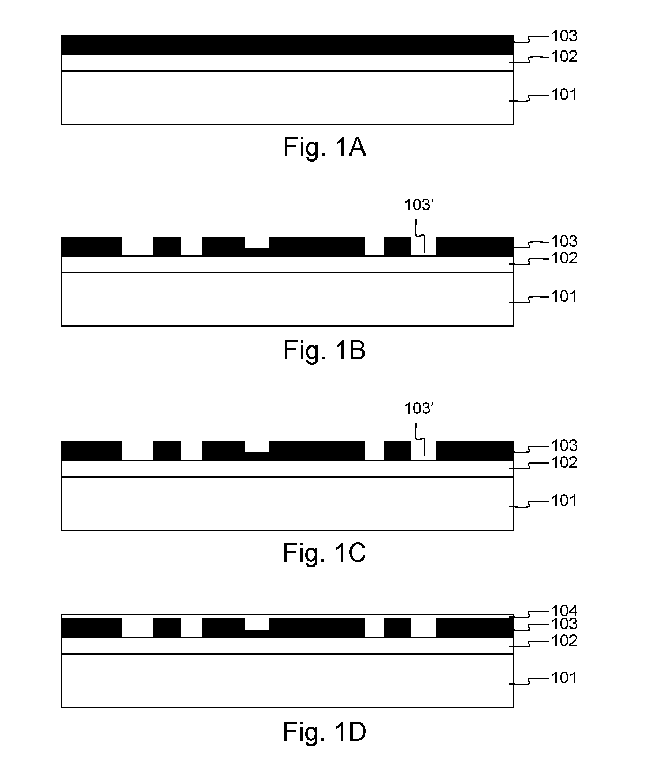

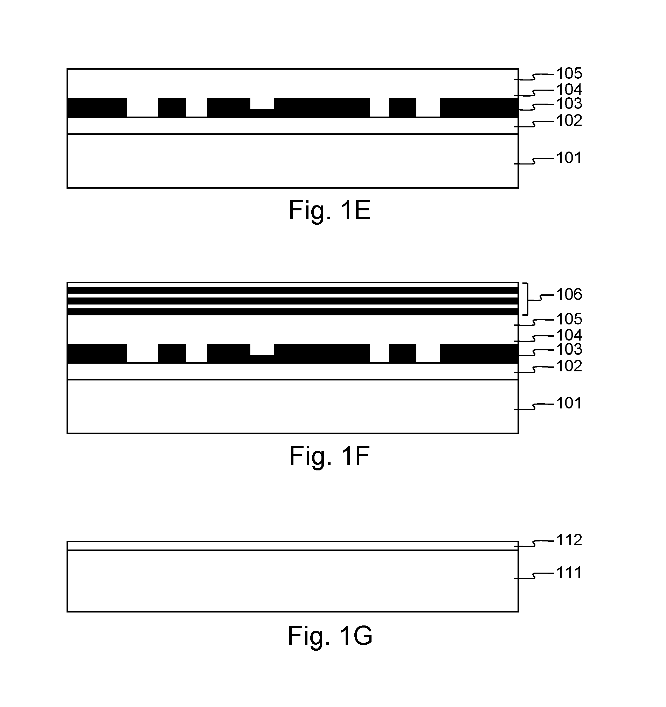

Fig. 1A-1F illustrate manufacturing a first wafer with first layer stack consisting of an overclad layer 102, a patterned waveguide layer 103, an underclad layer 105 and a DBR 106. Fig. 1G illustrates manufacturing a second wafer with second layer stack consisting of a thin silicon dioxide bonding layer 112.

Fig. 1A shows the result of a first step in the processing of the first wafer. This first wafer is processed in order to contain a high quality, transferrable waveguide and a cost-efficient buried DBR. In the first step illustrated by Fig. 1A, a thick oxide layer 102 of at least 1.5 micron is grown on a silicon substrate 101, typically named the "handle" or "support". Thereafter, the first wafer receives a high quality silicon nitride or SiN film 103, deposited via a high temperature Low Pressure Chemical Vapor Deposition or LPCVD process. This LPCVD process will typically take place at temperatures above 750 °C and deposit for instance a 400 nanometer thick silicon nitride layer 103. The SiN layer 103 will have to be patterned and annealed, as will be explained further below. Optionally, before the patterning, a sequence of anneals may further improve the quality and stoichiometry of the SiN waveguide layer 103. Such anneals take place at temperatures above 1000 °C, preferably at temperatures near 1150 °C. As a result, a high quality, uniform SiN layer 103 is obtained for fabricating highly performing waveguides (and other optical structures) with minimum propagation losses.

Fig. 1B shows the result of the second step in the processing of the first wafer. The silicon nitride layer 103 is patterned via one or more masking steps depending on the number of different etch depths required. As a result, gaps or channels 103' are created in the high quality SiN layer 103.

In a third step of the processing of the first wafer, illustrated by Fig. 1C, a sequence of anneals improves the quality and stoichiometry of the patterned silicon nitride waveguide layer 103. The mechanical structure of the first wafer does not change but the high temperature annealing alters the SiN layer 103 to further reduce optical loss and reduce stress.

Fig. 1D shows the result of the fourth step in processing the first wafer. In this fourth step, the first wafer is covered with silicon dioxide 104 or SiO₂ through a Chemical Vapor Deposition or CVD process. Chemical/mechanical polishing of the SiO₂ layer 104 allows to planarize the patterned first wafer.

Fig. 1E shows the result of a fifth step in processing the first wafer. The first wafer receives an underclad oxide layer 105 through a deposition process. In a preferred embodiment, this underclad layer 105 is a silicon dioxide or SiO₂ layer with a thickness of at least 1.5 micron deposited on the planarized thin silicon dioxide layer 104. The underclad oxide layer is necessary in order to reduce optical losses to the substrate.

Fig. 1F illustrates the result of a sixth step in the processing of the first wafer. A buried DBR 106 consisting of a number of alternating layers of amorphous or poly silicon (the thin, black layers in Fig. 1 F) and silicon dioxide (the thin, white layers in Fig. 1 F) are deposited through a Chemical Vapor Deposition or CVD process. As an alternative, the buried DBR 106 may be composed of alternating layers of silicon nitride and silicon dioxide, or even other alternating layers of different refractive index materials that are deposited through a CVD process. The last layer is preferably silicon dioxide to facilitate wafer bonding with the second wafer. Optionally, the underclad layer thickness may be trimmed before the DBR deposition.

Fig. 1G illustrates the manufacturing of a second wafer. A thin silicon dioxide layer 112 is grown or deposited on a silicon substrate 111. The silicon dioxide layer 112 for instance has a thickness of 50 nanometers and serves as material for wafer bonding. It should be noted that the deposition of this silicon dioxide layer is not essential as wafer bonding is possible between silicon and silicon dioxide. However, in the preferred embodiment, a wafer bond process of silicon dioxide to silicon dioxide is used as this has proven to offer the highest yields.

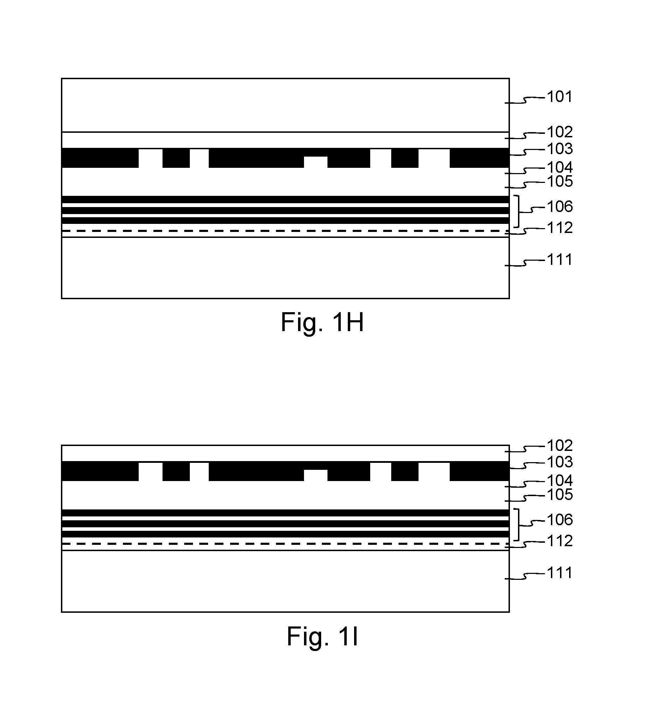

Fig. 1H illustrates bonding of the processed first and second wafers. Thereto, the first processed wafer with layers 101, 102, 103, 104, 105 and 106 is inverted and transferred onto the processed second wafer with layers 111 and 112. Then, wafer bonding of the first and second wafers is realized, at temperatures low enough not to affect the DBR or to cause excess stress in the wafer. In the preferred embodiment, the temperature of 500 °C is not exceeded. The bonding is illustrated by the dashed line in Fig. 1H.

In the following step of the manufacturing process, illustrated by Fig. 1I, the back side or substrate 101 of the first wafer is removed using a two step approach. The majority of silicon material is removed through a back grind process. Then, a wet etch process with high selectivity to the oxide 102 is used to remove the last part of the silicon substrate 101. This way, the buried DBR 106 and the high quality waveguide layer 103 are inverted and transferred onto the second wafer. The buried DBR 106 is cost-efficiently manufactured through CVD. The rest of the wafer scale processing steps may be performed thereafter. These steps may include metallization and providing interconnects.

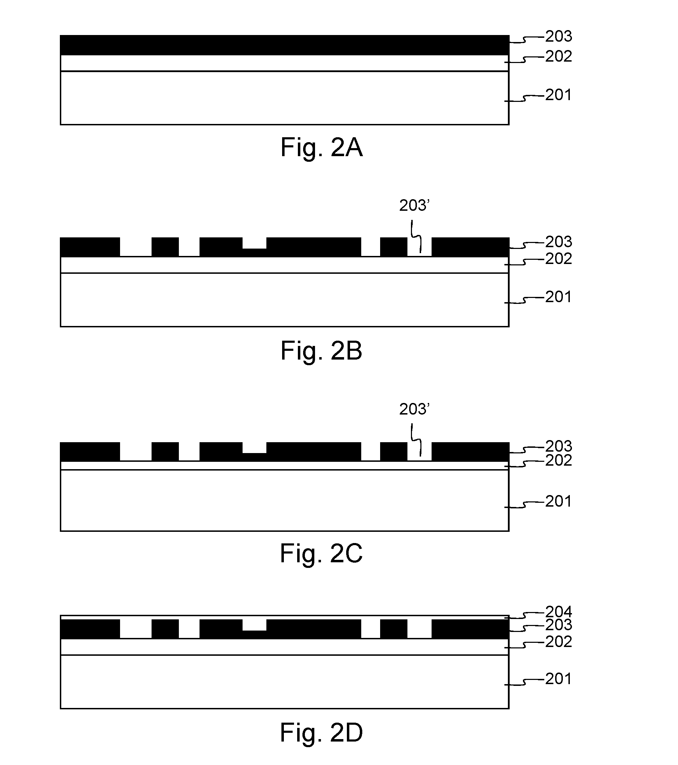

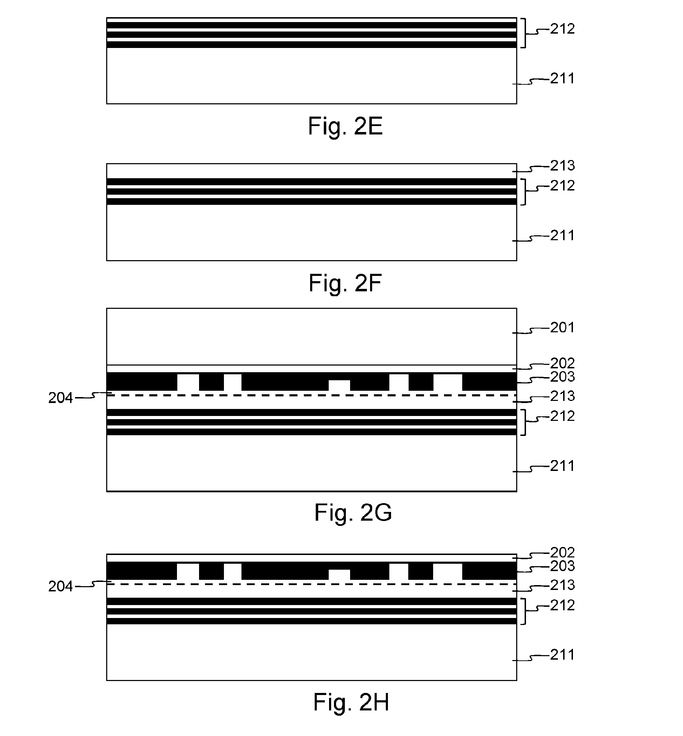

Fig. 2A-2D illustrate manufacturing a first wafer with first layer stack consisting of an overclad layer 202, and a patterned waveguide layer 203. Fig. 2E-2F illustrate manufacturing a second wafer with second layer stack consisting of a DBR 212 and an underclad layer 213.

Fig. 2A shows the result of a first step in the processing of a first wafer. This first wafer will be processed in order to contain a high quality, transferrable waveguide. In the first step illustrated by Fig. 2A, a thick oxide layer 202 of at least 1.5 micron is grown on a silicon substrate 201, typically named the "handle" or "support". Thereafter, the first wafer receives a high quality silicon nitride or SiN film 203, deposited via a high temperature Low Pressure Chemical Vapor Deposition or LPCVD process. This LPCVD process will typically take place at temperatures above 750 °C and deposit for instance a 400 nanometer thick silicon nitride layer 203. The SiN layer 203 will have to be patterned and annealed, as will be explained below. Optionally, before the patterning, a sequence of anneals may improve the quality and stoichiometry of the SiN waveguide layer 203. Such anneals take place at temperatures above 1000 °C, preferably at temperatures near 1150 °C. As a result, a high quality, uniform SiN layer 203 is obtained for fabricating highly performing waveguides (and other optical structures) with minimum propagation losses.

Fig. 2B shows the result of the second step in the processing of the first wafer. The silicon nitride layer 203 is patterned via one or more masking steps depending on the number of different etch depths required. As a result, gaps or channels 203' are created in the high quality SiN layer 203.

In a third step of the processing of the first wafer, illustrated by Fig. 2C, a sequence of anneals improves the quality and stoichiometry of the silicon nitride waveguide layer 203. The mechanical structure of the first wafer does not change but the high temperature annealing alters the SiN layer 203 to further reduce optical loss and reduce stress.

Fig. 2D shows the result of the fourth step in processing the first wafer. In this fourth step, the first wafer is covered with silicon dioxide 204 or SiO₂ through a Chemical Vapor Deposition or CVD process. Chemical/mechanical polishing of the SiO₂ layer 204 allows to planarize the first wafer to become ready for bonding to the second wafer.

Fig. 2E and Fig. 2F illustrate the processing of the second wafer with a layer stack containing a silicon substrate 211, a buried DBR 212 consisting of a number of alternating layers of amorphous or poly silicon and silicon dioxide, and an underclad layer 213. As an alternative, the buried DBR 212 may be composed of alternating layers of silicon nitride and silicon dioxide. These alternating layers of different refractive index materials are deposited through a Chemical Vapor Deposition or CVD process. The second wafer receives an underclad oxide layer 213 through a deposition process. In a preferred embodiment illustrated by Fig. 2F, this underclad layer 213 is a silicon dioxide or SiO₂ layer with a thickness of at least 1.5 micron deposited on the DBR's top surface through a chemical vapour deposition process. High temperature exposure, above 850 °C, of the second wafer is avoided.

Fig. 2G illustrates bonding of the processed first and second wafers. Thereto, the first processed wafer with layers 201, 202, 203 and 204 is transferred onto the processed second wafer with layers 211, 212 and 213. Optionally, the underclad layer thickness may be trimmed before transferring the first wafer onto the second. Then, wafer bonding of the first and second wafers is realized at temperatures low enough not to affect the DBR or to cause excess stress in the wafer. In the preferred embodiment, the temperature of 500 °C is not exceeded. The bonding is illustrated by the dashed line in Fig. 2G.

In the following step of the manufacturing process, illustrated by Fig. 2H, the back side or substrate 201 of the first wafer is removed using a two step approach. The majority of silicon material is removed through a back grind process. Then, a wet etch process with high selectivity to the oxide 202 is used to remove the last part of the silicon substrate 201. This way, the high quality waveguide layer 203 is transferred onto the second wafer containing the buried DBR 212 that is cost-efficiently manufactured through CVD. The rest of the wafer scale processing steps may be performed thereafter. These steps may include metallization and providing interconnects.

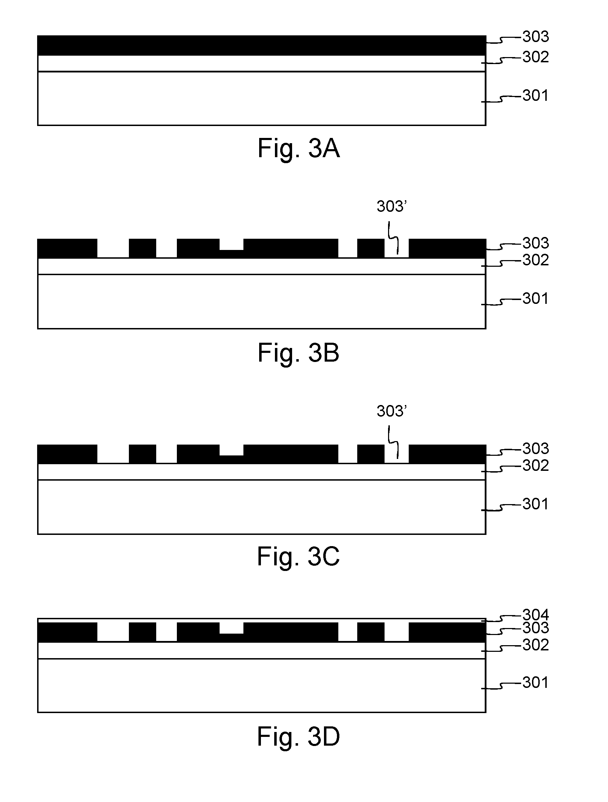

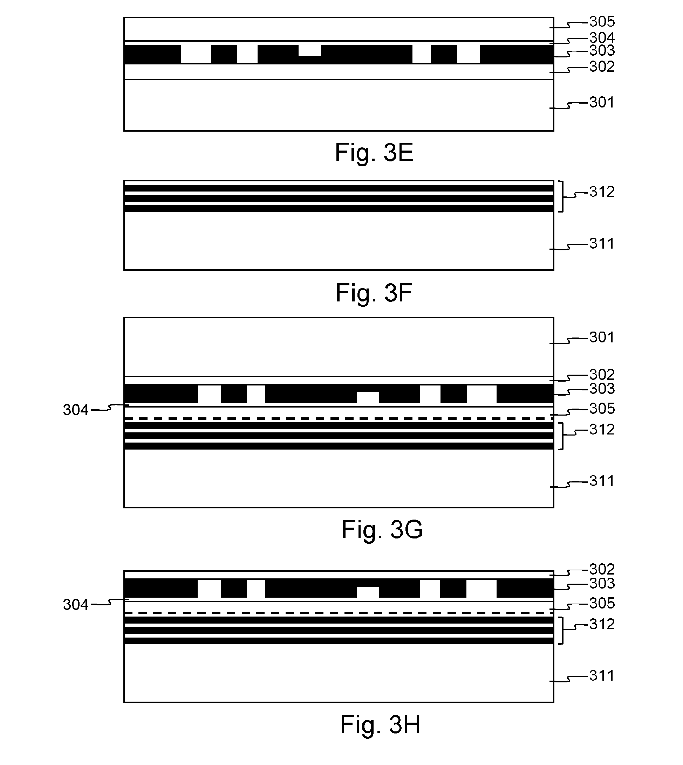

Fig. 3A-3E illustrate manufacturing a first wafer with first layer stack consisting of an overclad layer 302, a patterned waveguide layer 303, and an underclad layer 305. Fig. 3F illustrates manufacturing a second wafer with second layer stack consisting of a buried DBR 312.

Fig. 3A shows the result of a first step in the processing of the first wafer. This first wafer is processed in order to contain a high quality, transferrable waveguide. In the first step illustrated by Fig. 1A, a thick oxide layer 302 of at least 1.5 micron is grown on a silicon substrate 301, typically named the "handle" or "support". Thereafter, the first wafer receives a high quality silicon nitride or SiN film 303, deposited via a high temperature Low Pressure Chemical Vapor Deposition or LPCVD process. This LPCVD process will typically take place at temperatures above 750 °C and deposit for instance a 400 nanometer thick silicon nitride layer 303. The SiN layer 303 will have to be patterned and annealed, as will be explained further below. Optionally, before the patterning, a sequence of anneals may further improve the quality and stoichiometry of the SiN waveguide layer 303. Such anneals take place at temperatures above 1000 °C, preferably at temperatures near 1150 °C. As a result, a high quality, uniform SiN layer 303 is obtained for fabricating highly performing waveguides (and other optical structures) with minimum propagation losses.

Fig. 3B shows the result of the second step in the processing of the first wafer. The silicon nitride layer 303 is patterned via one or more masking steps depending on the number of different etch depths required. As a result, gaps or channels 303' are created in the high quality SiN layer 303.

In a third step of the processing of the first wafer, illustrated by Fig. 3C, a sequence of anneals improves the quality and stoichiometry of the patterned silicon nitride waveguide layer 303. The mechanical structure of the first wafer does not change but the high temperature annealing alters the SiN layer 303 to further reduce optical loss and reduce stress.

Fig. 3D shows the result of the fourth step in processing the first wafer. In this fourth step, the first wafer is covered with silicon dioxide 304 or SiO₂ through a Chemical Vapor Deposition or CVD process. Chemical/mechanical polishing of the SiO₂ layer 304 allows to planarize the patterned first wafer after.

Fig. 3E shows the result of a fifth step in processing the first wafer. The first wafer receives an underclad oxide layer 305 through a deposition process. Preferably, this underclad layer 305 is a silicon dioxide or SiO₂ layer with a thickness of at least 1.5 micron deposited on the planarized thin silicon dioxide layer 304. The underclad oxide layer 305 is necessary in order to reduce optical losses to the substrate.

Fig. 3F illustrates the processing of the second wafer with a layer stack containing a silicon substrate 311 and a buried DBR 312 consisting of a number of alternating layers of amorphous or poly silicon (the thin, black layers in Fig. 3F) and silicon dioxide (the thin, white layers in Fig. 3F). As an alternative, the buried DBR 312 may be composed of alternating layers of silicon nitride and silicon dioxide, or even other alternating layers of different refractive index materials. The alternating layers of different refractive index materials are deposited through a Chemical Vapor Deposition or CVD process. The last layer is preferably silicon dioxide to facilitate wafer bonding with the first wafer. High temperature exposure of the second wafer is avoided. It should be noted that the deposition of this silicon dioxide layer is not essential as wafer bonding is possible between silicon and silicon dioxide. However, in the preferred embodiment, a wafer bond process of silicon dioxide to silicon dioxide is used as this has proven to offer the highest yields.

Fig. 3G illustrates bonding of the processed first and second wafers. Thereto, the first processed wafer with layers 301, 302, 303, 304 and 305 is inverted and transferred onto the processed second wafer with layers 311 and 312. Optionally, the underclad layer thickness may be trimmed before transferring the first wafer onto the second. Then, wafer bonding of the first and second wafers is realized at temperatures low enough not to affect the DBR or to cause excess stress in the wafer. In the preferred embodiment, the temperature of 500 °C is not exceeded. The bonding is illustrated by the dashed line in Fig. 3G.

In the following step of the manufacturing process, illustrated by Fig. 3H, the back side or substrate 301 of the first wafer is removed using a two step approach. The majority of silicon material is removed through a back grind process. Then, a wet etch process with high selectivity to the oxide of the overclad layer 302 is used to remove the last part of the silicon substrate 301. This way, the high quality waveguide layer 303 is transferred onto the second wafer containing the buried DBR 312 that is cost-efficiently manufactured through CVD. The rest of the wafer scale processing steps may be performed thereafter. These steps may include metallization and providing interconnects.

The first three embodiments of the invention, illustrated respectively by Fig. 1A-1I, Fig. 2A-2H, and Fig. 3A-3H, are advantageous in that the annealing is performed on the patterned waveguide as a result of which this high temperature process will be more effective at reducing propagation losses. This is because the anneal causes intermixing of the overclad and the silicon nitride resulting in smoothing and less scattering of light. The bonding however requires appropriate cleans and planarizing.

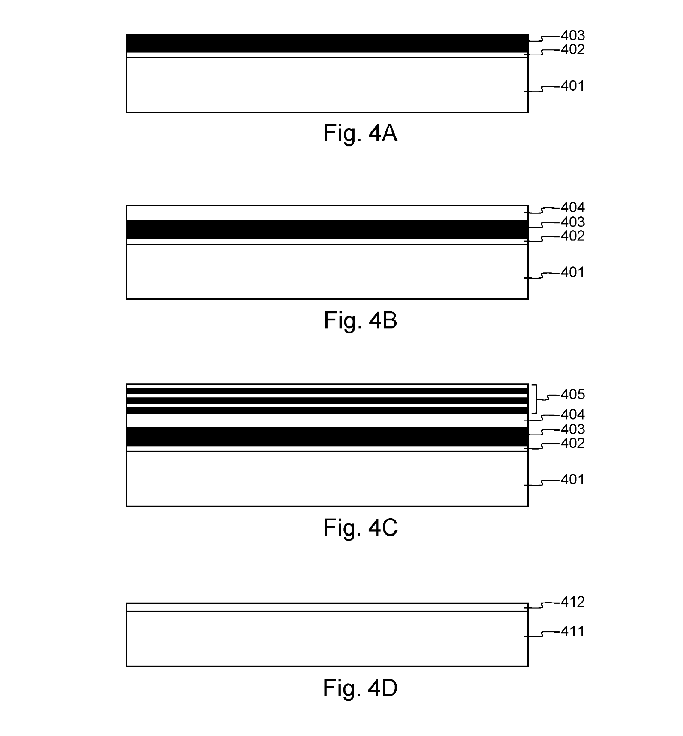

Fig. 4A-4C illustrate manufacturing a first wafer with first layer stack consisting of a thin oxide layer 402, an unpatterned waveguide layer 403, an underclad layer 404 and a DBR 405. Fig. 4D illustrates manufacturing a second wafer with second layer stack consisting of a thin silicon dioxide bonding layer 412. Patterning the waveguide layer 403 and depositing an overclad layer 422 are executed after bonding the first and second wafers.

Fig. 4A shows the result of a first step in the processing of the first wafer. This first wafer is processed in order to contain a high quality, transferrable waveguide layer and a cost-efficient buried DBR. In the first step illustrated by Fig. 4A, a thin oxide layer 402 of for instance 50 nanometers is grown on a silicon substrate 401, typically named the "handle" or "support". Thereafter, the first wafer receives a high quality silicon nitride or SiN film 403, deposited via a high temperature Low Pressure Chemical Vapor Deposition or LPCVD process. This LPCVD process will typically take place at temperatures above 750 °C and deposit for instance a 400 nanometer thick silicon nitride layer 403. A sequence of anneals further improves the quality and stoichiometry of the SiN waveguide layer 403. Such anneals take place at temperatures above 1000 °C, preferably at temperatures near 1150 °C. The mechanical structure of the first wafer does not change but the high temperature annealing alters the SiN layer 403 to reduce optical loss and stress. As a result, a high quality, uniform SiN layer 403 is obtained for fabricating highly performing waveguides (and other optical structures) with minimum propagation losses.

Fig. 4B shows the result of a second step in processing the first wafer. The first wafer receives an underclad oxide layer 404 through a deposition process. Preferably, this underclad layer 404 is a silicon dioxide or SiO₂ layer with a thickness of at least 1.5 micron deposited on the high quality waveguide layer 403. The underclad oxide layer 404 is necessary in order to reduce optical losses to the substrate.

Fig. 4C illustrates the result of a third step in the processing of the first wafer. A buried DBR 405 consisting of a number of alternating layers of amorphous or poly silicon (the thin, black layers in Fig. 4C) and silicon dioxide (the thin, white layers in Fig. 4C) are deposited through a Chemical Vapor Deposition or CVD process. As an alternative, the buried DBR 405 may be composed of alternating layers of silicon nitride and silicon dioxide, or even other alternating layers of different refractive index materials that are deposited through a CVD process. The last layer is preferably silicon dioxide to facilitate wafer bonding with the second wafer. Optionally, the underclad layer thickness may be trimmed before the DBR deposition.

Fig. 4D illustrates the manufacturing of a second wafer. A thin silicon dioxide layer 412 is grown or deposited on a silicon substrate 411. The silicon dioxide layer 412 for instance has a thickness of 50 nanometers and serves as material for low temperature wafer bonding. It should be noted that the deposition of this silicon dioxide layer is not essential as wafer bonding is possible between silicon and silicon dioxide. However, in the preferred embodiment, a wafer bond process of silicon dioxide to silicon dioxide is used as this has proven to offer the highest yields.

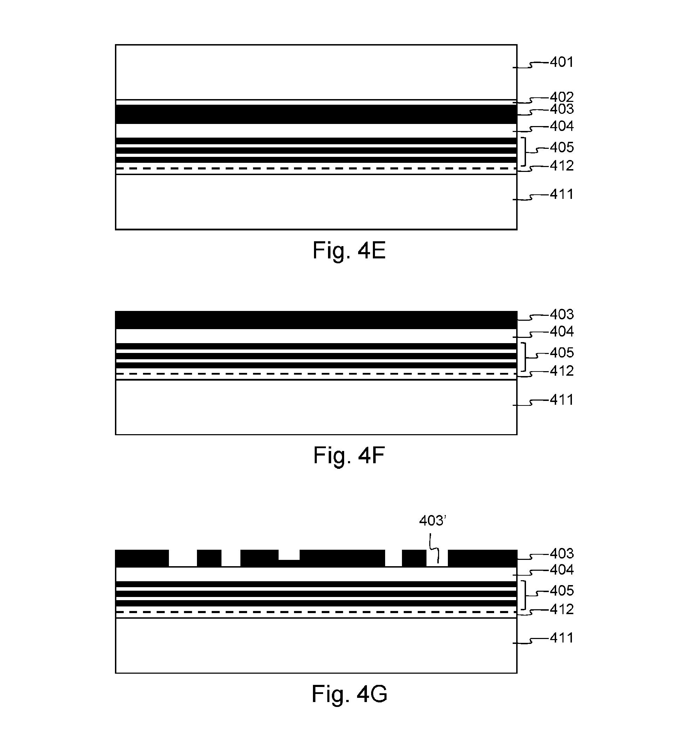

Fig. 4E illustrates bonding of the processed first and second wafers. Thereto, the first processed wafer with layers 401, 402, 403, 404 and 405 is inverted and transferred onto the processed second wafer with layers 411 and 412. Then, wafer bonding of the first and second wafers is realized at temperatures low enough not to affect the DBR or to cause excess stress in the wafer. In the preferred embodiment, the temperature of 500 °C is not exceeded. The bonding is illustrated by the dashed line in Fig. 4E.

In the following step of the manufacturing process, illustrated by Fig. 4F, the back side or substrate 401 of the first wafer is removed using a two step approach. The majority of silicon material is removed through a back grind process. Then, a wet etch process with high selectivity to the oxide 402 is used to remove the last part of the silicon substrate 401. Finally, the thin oxide layer 402 is removed.

Fig. 4G shows the result of the next step in the processing of the DBR, underclad, waveguide and overclad platform. The silicon nitride layer 403 is patterned via one or more masking steps depending on the number of different etch depths required. As a result, gaps or channels 403' are created in the high quality SiN layer 403.

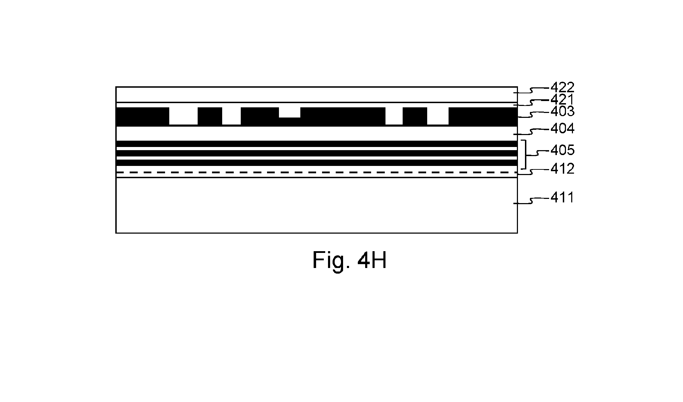

Fig. 4H shows the result of the next steps in manufacturing the DBR, underclad, waveguide and overclad platform. A silicon dioxide or SiO₂ layer 421 is deposited through a Chemical Vapor Deposition or CVD process. Chemical/mechanical polishing of the SiO₂ layer 421 allows to planarize the wafer after patterning. Thereafter, an overclad layer 422 is deposited. A thick oxide layer 422 of at least 1.5 micron is grown or deposited on the planarized wafer. This overclad layer 422 is needed to reduce optical losses.

Again, a cost-efficient buried DBR 405 manufactured through CVD is combined with a high quality waveguide 403 via a transfer process between two wafers. The rest of the wafer scale processing steps may be performed thereafter. These steps may include metallization and providing interconnects.

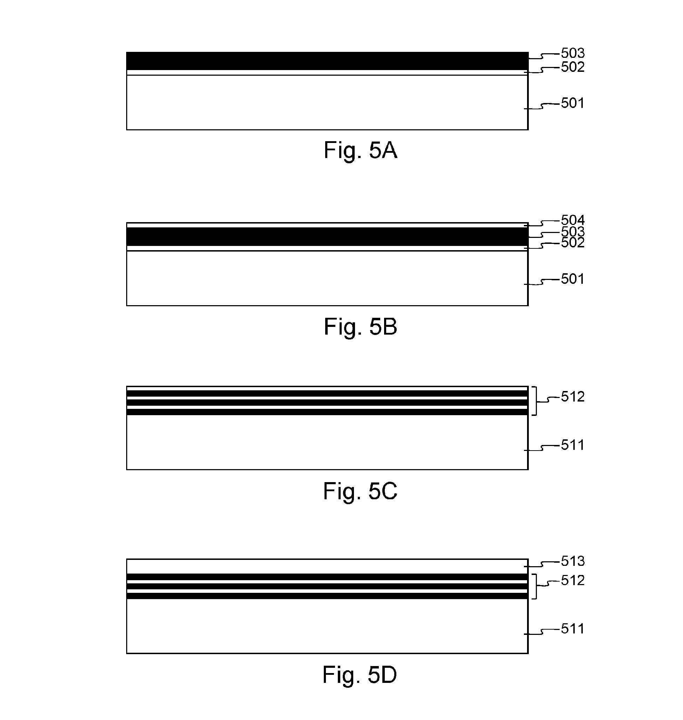

Fig. 5A-5B illustrate manufacturing a first wafer with first layer stack consisting of a first thin oxide layer 502, an unpatterned waveguide layer 503, and a second thin oxide layer 504. Fig. 5C-5D illustrate manufacturing a second wafer with second layer stack consisting of a DBR 512 and an underclad layer 513. Patterning the waveguide layer 503 and depositing an overclad layer 522 are executed after bonding the first and second wafers.

Fig. 5A shows the result of a first step in the processing of a first wafer. This first wafer will be processed in order to contain a high quality, transferrable waveguide layer. In the first step illustrated by Fig. 5A, a thin oxide layer 502 of for instance 50 nanometers is grown on a silicon substrate 501, typically named the "handle" or "support". Thereafter, the first wafer receives a high quality silicon nitride or SiN film 503, deposited via a high temperature Low Pressure Chemical Vapor Deposition or LPCVD process. This LPCVD process will typically take place at temperatures above 750 °C and deposit for instance a 400 nanometer thick silicon nitride layer 503. A sequence of anneals will improve the quality and stoichiometry of the SiN waveguide layer 503. Such anneals take place at temperatures above 1000 °C, preferably at temperatures near 1150 °C. The mechanical structure of the first wafer does not change but the high temperature annealing alters the SiN layer 503 to further reduce optical losses and reduce stress. As a result, a high quality, uniform SiN layer 503 is obtained for fabricating highly performing waveguides (and other optical structures) with minimum propagation losses.

Fig. 5B shows the result of a second step in the processing of the first wafer. A thin silicon dioxide layer 504 is grown or deposited on the waveguide layer 503. The silicon dioxide layer 504 for instance has a thickness of 50 nanometers and serves as material for low temperature wafer bonding. It should be noted that the deposition of this silicon dioxide layer is not essential as wafer bonding is possible between silicon and silicon dioxide. However, in the preferred embodiment, a wafer bond process of silicon dioxide to silicon dioxide is used as this has proven to offer the highest yields.

Fig. 5C and Fig. 5D illustrate the processing of the second wafer with a layer stack containing a silicon substrate 511, a buried DBR 512 consisting of a number of alternating layers of amorphous or poly silicon and silicon dioxide, and an underclad layer 513. As an alternative, the buried DBR 512 may be composed of alternating layers of silicon nitride and silicon dioxide. These alternating layers of different refractive index materials are deposited through a Chemical Vapor Deposition or CVD process. The second wafer receives an underclad oxide layer 513 through a deposition process. Preferably, this underclad layer 513 is a silicon dioxide or SiO₂ layer with a thickness of at least 1.5 micron deposited on the DBR's top surface through a chemical vapor deposition process. The underclad layer 513 is required to reduce optical losses to the substrate. High temperature exposure, above 850 °C, of the second wafer is avoided.

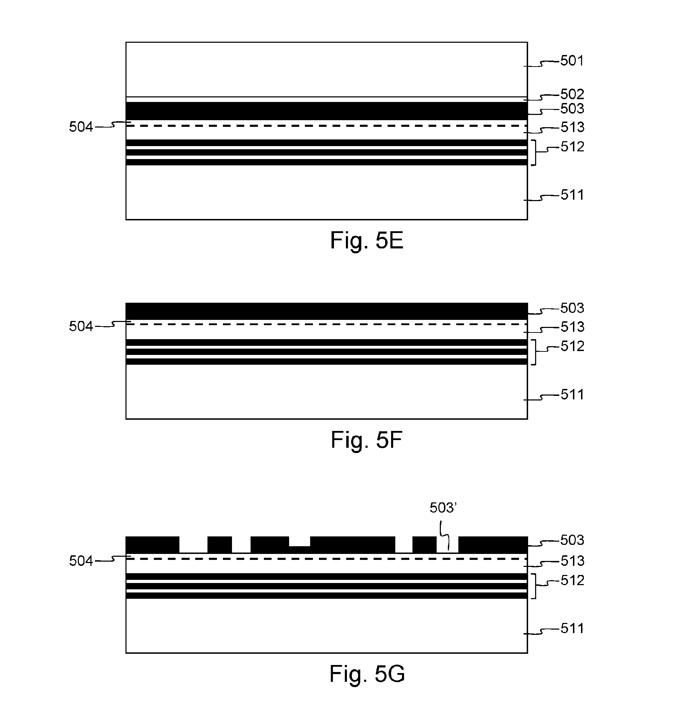

Fig. 5E illustrates bonding of the processed first and second wafers. Thereto, the first processed wafer with layers 501, 502, 503 and 504 is transferred onto the processed second wafer with layers 511, 512 and 513. Optionally, the underclad layer thickness may be trimmed before transferring the first wafer onto the second. Then, wafer bonding of the first and second wafers is realized at temperatures low enough not to affect the DBR or to cause excess stress in the wafer. In the preferred embodiment, the temperature of 500 °C is not exceeded. The bonding is illustrated by the dashed line in Fig. 5E.

In the following step of the manufacturing process, illustrated by Fig. 5F, the back side or substrate 501 of the first wafer is removed using a two step approach. The majority of silicon material is removed through a back grind process. Then, a wet etch process with high selectivity to the oxide 502 is used to remove the last part of the silicon substrate 501. Finally, the thin oxide layer 502 is removed.

Fig. 5G shows the result of the next step in the processing of the DBR, underclad, waveguide and overclad platform. The silicon nitride layer 503 is patterned via one or more masking steps depending on the number of different etch depths required. As a result, gaps or channels 503' are created in the high quality SiN layer 503.

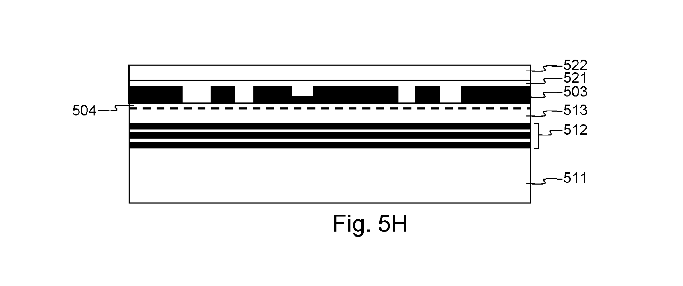

Fig. 5H shows the result of the next steps in manufacturing the DBR, underclad, waveguide and overclad platform. A silicon dioxide or SiO₂ layer 521 is deposited through a Chemical Vapor Deposition or CVD process. Chemical/mechanical polishing of the SiO₂ layer 521 allows to planarize the wafer after patterning. Thereafter, an overclad layer 522 is deposited. A thick oxide layer 522 of at least 1.5 micron is grown or deposited on the planarized wafer. This overclad layer 522 is needed to reduce optical losses.

Again, a cost-efficient buried DBR 512 manufactured through CVD is combined with a high quality waveguide 503 via a transfer process between two wafers. The rest of the wafer scale processing steps may be performed thereafter. These steps may include metallization and providing interconnects.

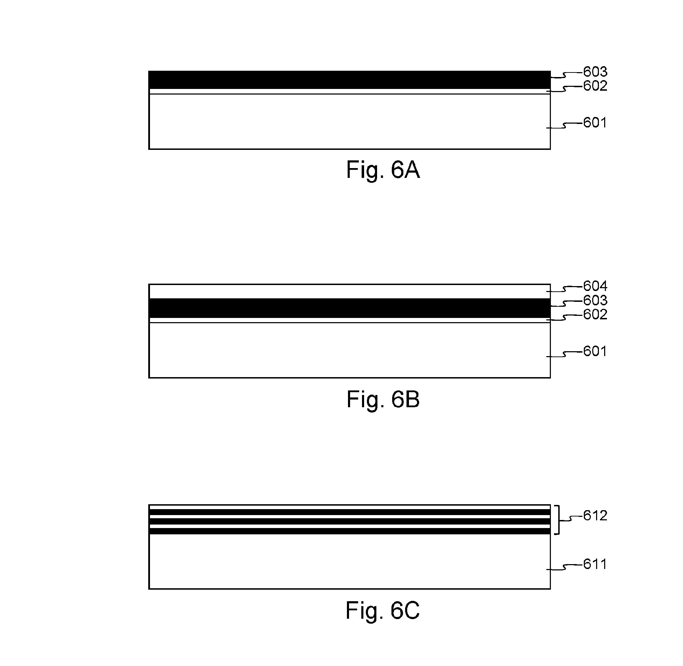

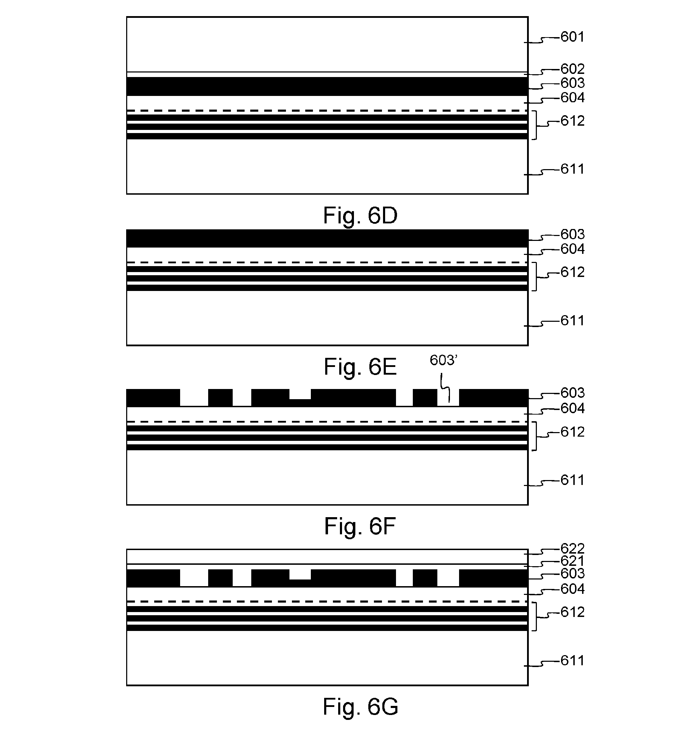

Fig. 6A-6E illustrate manufacturing a first wafer with first layer stack consisting of a thin oxide layer 602, an unpatterned waveguide layer 603, and an underclad layer 604. Fig. 6C illustrates manufacturing a second wafer with second layer stack consisting of a buried DBR 612. Patterning the waveguide layer 603 and depositing an overclad layer 622 are executed after bonding the first and second wafers.

Fig. 6A shows the result of a first step in the processing of the first wafer. This first wafer is processed in order to contain a high quality, transferrable waveguide layer. In the first step illustrated by Fig. 6A, a thin oxide layer 602 of for instance 50 nanometers is grown on a silicon substrate 601, typically named the "handle" or "support". Thereafter, the first wafer receives a high quality silicon nitride or SiN film 602, deposited via a high temperature Low Pressure Chemical Vapor Deposition or LPCVD process. This LPCVD process will typically take place at temperatures above 750 °C and deposit for instance a 400 nanometer thick silicon nitride layer 603. A sequence of anneals will further improve the quality and stoichiometry of the SiN waveguide layer 603. Such anneals take place at temperatures above 1000 °C, preferably at temperatures near 1150 °C. The mechanical structure of the first wafer does not change but the high temperature annealing alters the SiN layer 603 to further reduce optical losses and reduce stress. As a result, a high quality, uniform SiN layer 603 is obtained for fabricating highly performing waveguides (and other optical structures) with minimum propagation losses.

Fig. 6B shows the result of a second step in processing the first wafer. The first wafer receives an underclad oxide layer 604 through a deposition process. Preferably, this underclad layer 604 is a silicon dioxide or SiO₂ layer with a thickness of at least 1.5 micron deposited on the waveguide layer 603. The underclad oxide layer 604 is necessary in order to reduce optical losses to the substrate.

Fig. 6C illustrates the processing of the second wafer with a layer stack containing a silicon substrate 611 and a buried DBR 612 consisting of a number of alternating layers of amorphous or poly silicon (the thin, black layers in Fig. 6C) and silicon dioxide (the thin, white layers in Fig. 6C). As an alternative, the buried DBR 612 may be composed of alternating layers of silicon nitride and silicon dioxide, or even other alternating layers of different refractive index materials. The alternating layers of different refractive index materials are deposited through a Chemical Vapor Deposition or CVD process. The last layer is preferably silicon dioxide to facilitate wafer bonding with the first wafer. High temperature exposure of the second wafer is avoided. It should be noted that the deposition of this silicon dioxide layer is not essential as wafer bonding is possible between silicon and silicon dioxide. However, in the preferred embodiment, a wafer bond process of silicon dioxide to silicon dioxide is used as this has proven to offer the highest yields.

Fig. 6D illustrates bonding of the processed first and second wafers. Thereto, the first processed wafer with layers 601, 602, 603 and 604 is inverted and transferred onto the processed second wafer with layers 611 and 612. Optionally, the underclad layer thickness may be trimmed before transferring the first wafer onto the second. Then, wafer bonding of the first and second wafers is realized at temperatures low enough not to affect the DBR or to cause excess stress in the wafer. In the preferred embodiment, wherein the temperature of 500 °C is not exceeded. The bonding is illustrated by the dashed line in Fig. 6D.

In the following step of the manufacturing process, illustrated by Fig. 6E, the back side or substrate 601 of the first wafer is removed using a two step approach. The majority of silicon material is removed through a back grind process. Then, a wet etch process with high selectivity to the oxide of the overclad layer 602 is used to remove the last part of the silicon substrate 601. Finally, the thin oxide layer 602 is removed.

Fig. 6E shows the result of the next step in the processing of the DBR, underclad, waveguide and overclad platform. The silicon nitride layer 603 is patterned via one or more masking steps depending on the number of different etch depths required. As a result, gaps or channels 603' are created in the high quality SiN layer 603.

Fig. 6F shows the result of the next steps in manufacturing the DBR, underclad, waveguide and overclad platform. A silicon dioxide or SiO₂ layer 621 is deposited through a Chemical Vapor Deposition or CVD process. Chemical/mechanical polishing of the SiO₂ layer 621 allows to planarize the wafer after patterning. Thereafter, an overclad layer 622 is deposited. A thick oxide layer 622 of at least 1.5 micron is grown or deposited on the planarized wafer. This overclad layer 622 is needed to reduce optical losses.

Again, a cost-efficient buried DBR 612 manufactured through CVD is combined with a high quality waveguide 603 via a transfer process between two wafers. The rest of the wafer scale processing steps may be performed thereafter. These steps may include metallization and providing interconnects.

The three embodiments of the invention illustrated respectively by Fig. 4A-4H, Fig. 5A-5H, and Fig. 6A-6G, are advantageous in that the bonding of the first and second wafer is simplified in comparison with the first three embodiments since the bonding is done on unpatterned wafers. Annealing however is performed only on the unpatterned waveguide layer and, although effective in reducing the absorption peak around 1520 nm, does not improve scattering losses due to roughness in the waveguide sidewalls.

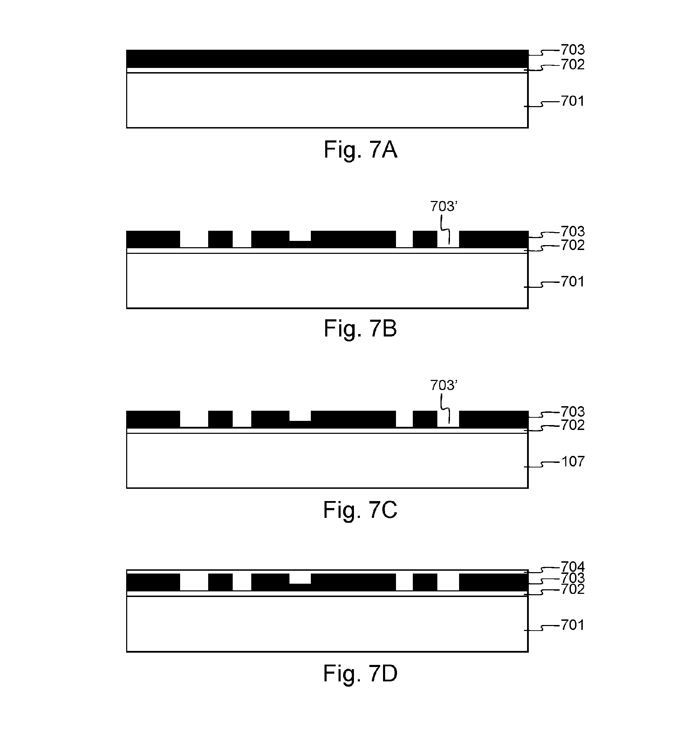

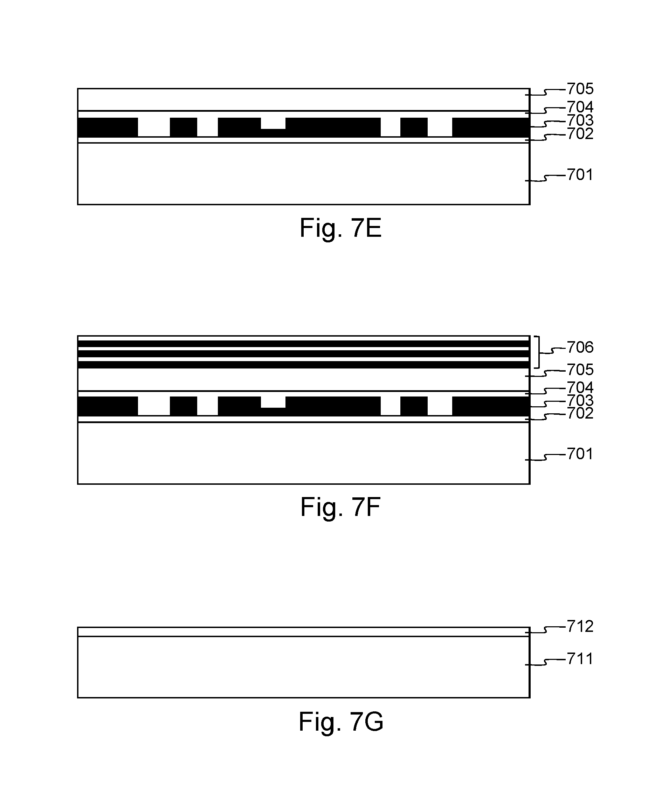

Fig. 7A-7F illustrate manufacturing a first wafer with first layer stack consisting of a thin oxide layer 702, a patterned waveguide layer 703, an underclad layer 705 and a DBR 706. Fig. 7G illustrates manufacturing a second wafer with second layer stack consisting of a thin silicon dioxide bonding layer 712. Depositing an overclad layer 721 is executed after bonding the first and second wafers.

Fig. 7A shows the result of a first step in the processing of the first wafer. This first wafer is processed in order to contain a high quality, transferrable waveguide and a cost-efficient buried DBR. In the first step illustrated by Fig. 7A, a thin oxide layer 702 of for instance 50 nanometers is grown on a silicon substrate 701, typically named the "handle" or "support". Thereafter, the first wafer receives a high quality silicon nitride or SiN film 703, deposited via a high temperature Low Pressure Chemical Vapor Deposition or LPCVD process. This LPCVD process will typically take place at temperatures above 750 °C and deposit for instance a 400 nanometer thick silicon nitride layer 703. The SiN layer 703 will have to be patterned and annealed, as will be explained further below. Optionally, before the patterning, a sequence of anneals may already improve the quality and stoichiometry of the SiN waveguide layer 703. Such anneals take place at temperatures above 1000 °C, preferably at temperatures near 1150 °C. As a result, a high quality, uniform SiN layer 703 is obtained for fabricating highly performing waveguides (and other optical structures) with minimum propagation losses.

Fig. 7B shows the result of the second step in the processing of the first wafer. The silicon nitride layer 703 is patterned via one or more masking steps depending on the number of different etch depths required. As a result, gaps or channels 703' are created in the high quality SiN layer 703.

In a third step of the processing of the first wafer, illustrated by Fig. 7C, a sequence of anneals improves the quality and stoichiometry of the patterned silicon nitride waveguide layer 703. The mechanical structure of the first wafer does not change but the high temperature annealing alters the SiN layer 703 to further reduce optical loss and reduce stress.

Fig. 7D shows the result of the fourth step in processing the first wafer. In this fourth step, the first wafer is covered with silicon dioxide 704 or SiO₂ through a Chemical Vapor Deposition or CVD process. Chemical/mechanical polishing of the SiO₂ layer 704 allows to planarize the patterned first wafer.

Fig. 7E shows the result of a fifth step in processing the first wafer. The first wafer receives an underclad oxide layer 705 through a deposition process. Preferably, this underclad layer 705 is a silicon dioxide or SiO₂ layer with a thickness of at least 1.5 micron deposited on the planarized thin silicon dioxide layer 704. The underclad oxide layer 705 is necessary in order to reduce optical losses to the substrate.

Fig. 7F illustrates the result of a sixth step in the processing of the first wafer. A buried DBR 706 consisting of a number of alternating layers of amorphous or poly silicon (the thin, black layers in Fig. 7F) and silicon dioxide (the thin, white layers in Fig. 7F) are deposited through a Chemical Vapor Deposition or CVD process. As an alternative, the buried DBR 706 may be composed of alternating layers of silicon nitride and silicon dioxide, or even other alternating layers of different refractive index materials that are deposited through a CVD process. The last layer is preferably silicon dioxide to facilitate wafer bonding with the second wafer. Optionally, the underclad layer thickness may be trimmed before the DBR deposition.

Fig. 7G illustrates the manufacturing of a second wafer. A thin silicon dioxide layer 712 is grown or deposited on a silicon substrate 711. The silicon dioxide layer 712 for instance has a thickness of 50 nanometers and serves as material for wafer bonding. It should be noted that the deposition of this silicon dioxide layer is not essential as wafer bonding is possible between silicon and silicon dioxide. However, in the preferred embodiment, a wafer bond process of silicon dioxide to silicon dioxide is used as this has proven to offer the highest yields.

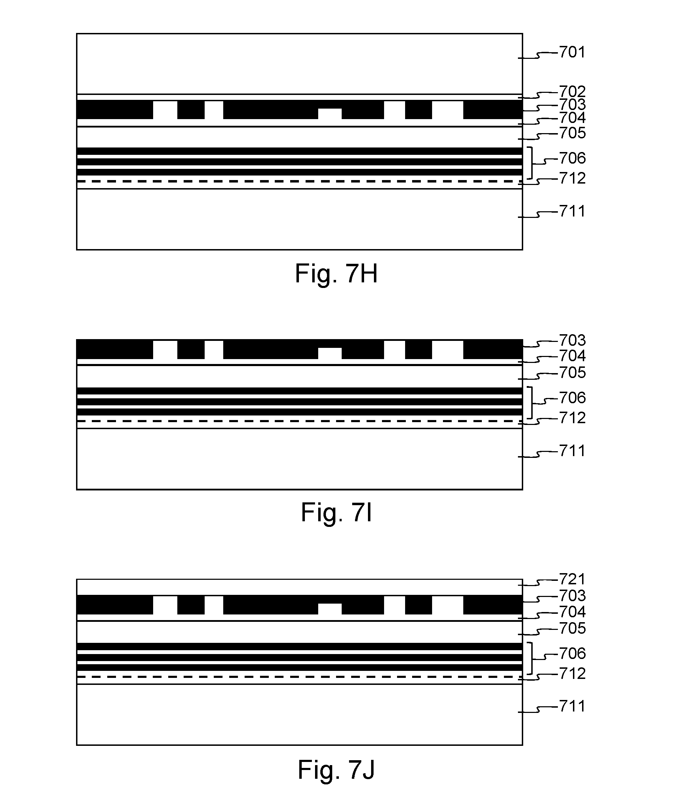

Fig. 7H illustrates bonding of the processed first and second wafers. Thereto, the first processed wafer with layers 701, 702, 703, 704, 705 and 706 is inverted and transferred onto the processed second wafer with layers 711 and 712. Then, wafer bonding of the first and second wafers is realized at temperatures low enough not to affect the DBR or to cause excess stress in the wafer. In the preferred embodiment, the temperature of 500 °C is not exceeded. The bonding is illustrated by the dashed line in Fig. 7H.

In the following step of the manufacturing process, illustrated by Fig. 7I, the back side or substrate 701 of the first wafer is removed using a two step approach. The majority of silicon material is removed through a back grind process. Then, a wet etch process with high selectivity to the oxide 702 is used to remove the last part of the silicon substrate 701. Finally, the thin oxide layer 702 is removed.

Fig. 7J shows the result of the next step in manufacturing the DBR, underclad, waveguide and overclad platform. An overclad layer 721 is deposited. A thick oxide layer 721 of at least 1.5 micron is grown or deposited. This overclad layer 721 is needed to reduce optical losses.

Again, a cost-efficient buried DBR 706 manufactured through CVD is combined with a high quality waveguide 703 via a transfer process between two wafers. The rest of the wafer scale processing steps may be performed thereafter. These steps may include metallization and providing interconnects.

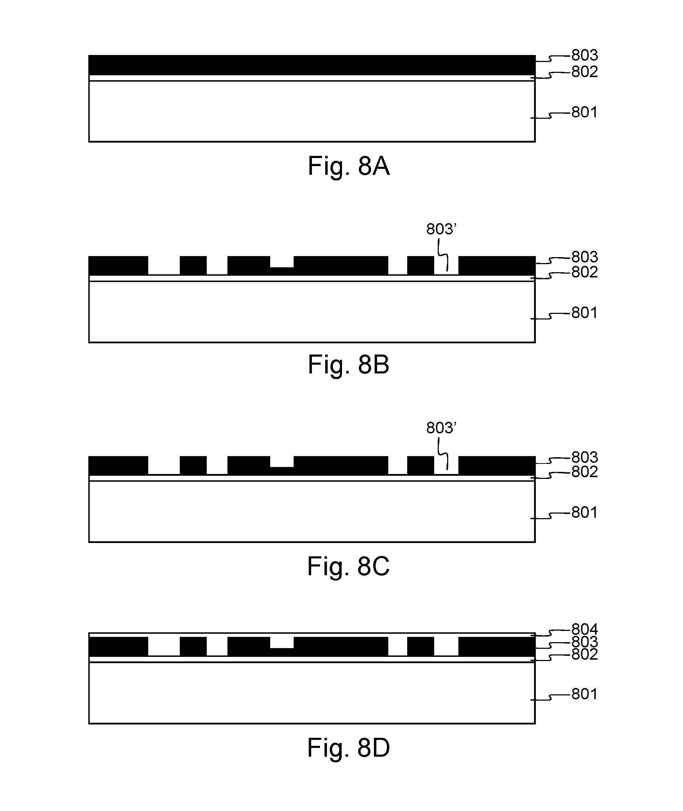

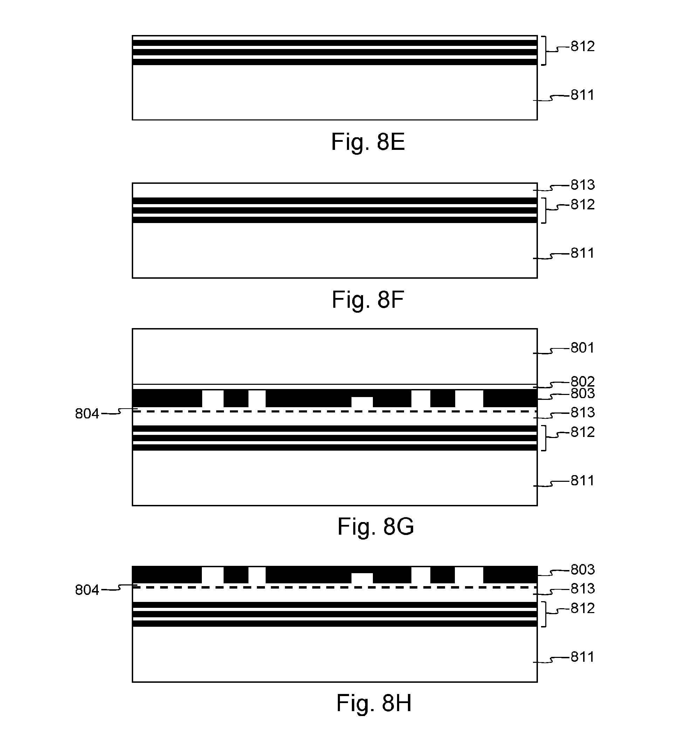

Fig. 8A-8D illustrate manufacturing a first wafer with first layer stack consisting of a thin oxide layer 802 and a patterned waveguide layer 803. Fig. 8E-8F illustrate manufacturing a second wafer with second layer stack consisting of a DBR 812 and an underclad layer 813. Depositing an overclad layer 821 is executed after bonding the first and second wafers.

Fig. 8A shows the result of a first step in the processing of a first wafer. This first wafer will be processed in order to contain a high quality, transferrable waveguide. In the first step illustrated by Fig. 8A, a thin oxide layer 802 of for instance 50 nanometers is grown on a silicon substrate 801, typically named the "handle" or "support". Thereafter, the first wafer receives a high quality silicon nitride or SiN film 803, deposited via a high temperature Low Pressure Chemical Vapor Deposition or LPCVD process. This LPCVD process will typically take place at temperatures above 750 °C and deposit for instance a 400 nanometer thick silicon nitride layer 803. The SiN layer 803 will have to be patterned and annealed, as will be explained below. Optionally, before the patterning, a sequence of anneals may already improve the quality and stochiometry of the SiN waveguide layer 803. Such anneals take place at temperatures above 1000 °C, preferably at temperatures near 1150 °C. As a result, a high quality, uniform SiN layer 803 is obtained for fabricating highly performing waveguides (and other optical structures) with minimum propagation losses.

Fig. 8B shows the result of the second step in the processing of the first wafer. The silicon nitride layer 803 is patterned via one or more masking steps depending on the number of different etch depths required. As a result, gaps or channels 803' are created in the high quality SiN layer 803.

In a third step of the processing of the first wafer, illustrated by Fig. 8C, a sequence of anneals improves the quality and stoichiometry of the silicon nitride waveguide layer 803. The mechanical structure of the first wafer does not change but the high temperature annealing alters the SiN layer 803 to further reduce optical loss and reduce stress.

Fig. 8D shows the result of the fourth step in processing the first wafer. In this fourth step, the first wafer is covered with silicon dioxide 804 or SiO₂ through a Chemical Vapor Deposition or CVD process. Chemical/mechanical polishing of the SiO₂ layer 804 allows to planarize the first wafer to become ready for bonding to the second wafer.

Fig. 8E and Fig. 8F illustrate the processing of the second wafer with a layer stack containing a silicon substrate 811, a buried DBR 812 consisting of a number of alternating layers of amorphous or poly silicon and silicon dioxide, and an underclad layer 813. As an alternative, the buried DBR 812 may be composed of alternating layers of silicon nitride and silicon dioxide. These alternating layers of different refractive index materials are deposited through a Chemical Vapor Deposition or CVD process. The second wafer receives an underclad oxide layer 813 through a deposition process. Preferably, this underclad layer 813 is a silicon dioxide or SiO₂ layer with a thickness of at least 1.5 micron deposited on the DBR's top surface through a chemical vapour deposition process. The underclad layer 813 is required to minimize optical losses to the substrate. High temperature exposure, above 850 °C, of the second wafer is avoided.

Fig. 8G illustrates bonding of the processed first and second wafers. Thereto, the first processed wafer with layers 801, 802, 803 and 804 is transferred onto the processed second wafer with layers 811, 812 and 813. Optionally, the underclad layer thickness may be trimmed before transferring the first wafer onto the second. Then, wafer bonding of the first and second wafers is realized at temperatures low enough not to affect the DBR or to cause excess stress in the wafer. In the preferred embodiment, the temperature of 500 °C is not exceeded. The bonding is illustrated by the dashed line in Fig. 8G.

In the following step of the manufacturing process, illustrated by Fig. 8H, the back side or substrate 801 of the first wafer is removed using a two step approach. The majority of silicon material is removed through a back grind process. Then, a wet etch process with high selectivity to the oxide 802 is used to remove the last part of the silicon substrate 801. Finally, the thin oxide layer 802 is removed.

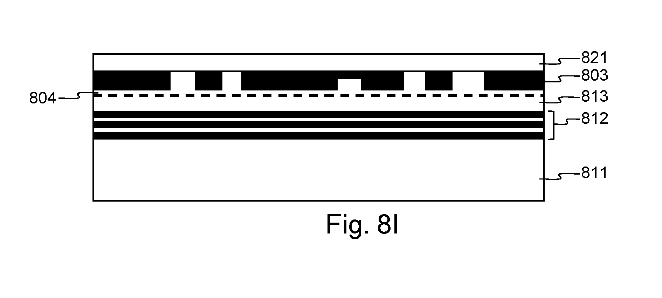

Fig. 8I shows the result of the next step in manufacturing the DBR, underclad, waveguide and overclad platform. An overclad layer 821 is deposited. A thick oxide layer 821 of at least 1.5 micron is grown or deposited. This overclad layer 821 is needed to reduce optical losses.

Again, a cost-efficient buried DBR 812 manufactured through CVD is combined with a high quality waveguide 803 via a transfer process between two wafers. The rest of the wafer scale processing steps may be performed thereafter. These steps may include metallization and providing interconnects.

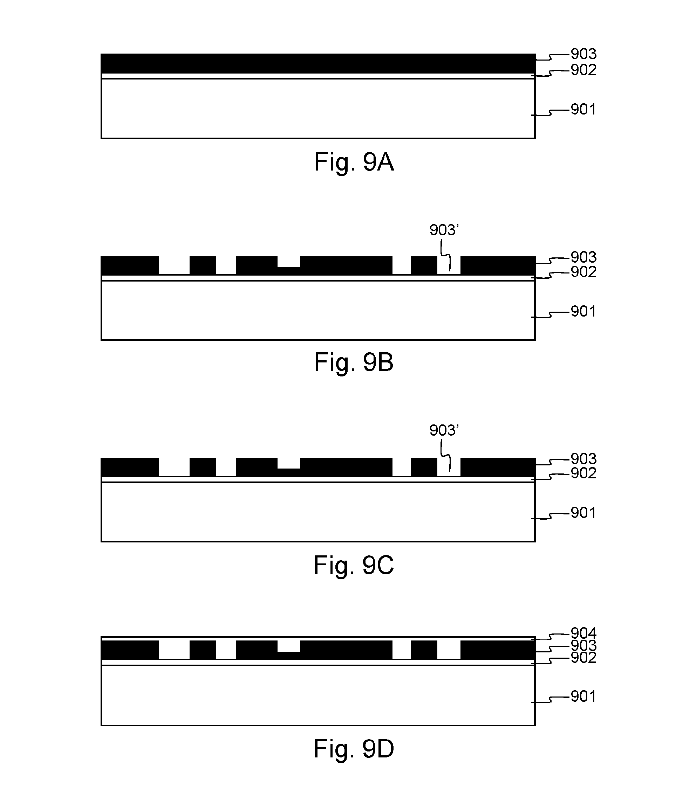

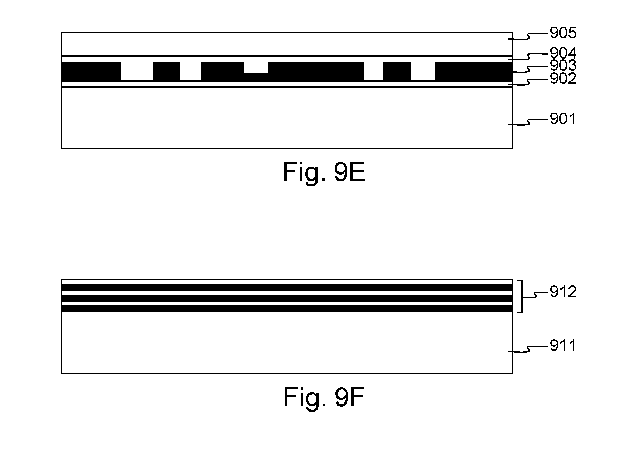

Fig. 9A-9E illustrate manufacturing a first wafer with first layer stack consisting of a thin oxide layer 902, a patterned waveguide layer 903, and an underclad layer 905. Fig. 9F illustrates manufacturing a second wafer with second layer stack consisting of a buried DBR 912.

Fig. 9A shows the result of a first step in the processing of the first wafer. This first wafer is processed in order to contain a high quality, transferrable waveguide. In the first step illustrated by Fig. 9A, a thin oxide layer 902 of for instance 50 nanometers is grown on a silicon substrate 901, typically named the "handle" or "support". Thereafter, the first wafer receives a high quality silicon nitride or SiN film 903, deposited via a high temperature Low Pressure Chemical Vapor Deposition or LPCVD process. This LPCVD process will typically take place at temperatures above 750 °C and deposit for instance a 400 nanometer thick silicon nitride layer 903. The SiN layer 903 will have to be patterned and annealed, as will be explained further below. Optionally, before the patterning, a sequence of anneals may already improve the quality and stoichiometry of the SiN waveguide layer 903. Such anneals take place at temperatures above 1000 °C, preferably at temperatures near 1150 °C. As a result, a high quality, uniform SiN layer 903 is obtained for fabricating highly performing waveguides (and eventual other optical structures) with minimum propagation losses.

Fig. 9B shows the result of the second step in the processing of the first wafer. The silicon nitride layer 903 is patterned via one or more masking steps depending on the number of different etch depths required. As a result, gaps or channels 903' are created in the high quality SiN layer 903.

In a third step of the processing of the first wafer, illustrated by Fig. 9C, a sequence of anneals improves the quality and stoichiometry of the patterned silicon nitride waveguide layer 903. The mechanical structure of the first wafer does not change but the high temperature annealing alters the SiN layer 903 to further reduce optical losses and reduce stress.

Fig. 9D shows the result of the fourth step in processing the first wafer. In this fourth step, the first wafer is covered with silicon dioxide 904 or SiO₂ through a Chemical Vapor Deposition or CVD process. Chemical/mechanical polishing of the SiO₂ layer 904 allows to planarize the patterned first wafer.

Fig. 9E shows the result of a fifth step in processing the first wafer. The first wafer receives an underclad oxide layer 905 through a deposition process. Preferably, this underclad layer 905 is a silicon dioxide or SiO₂ layer with a thickness of at least 1.5 micron deposited on the planarized thin silicon dioxide layer 904. The underclad oxide layer 905 is necessary in order to reduce optical losses to the substrate.

Fig. 9F illustrates the processing of the second wafer with a layer stack containing a silicon substrate 911 and a buried DBR 912 consisting of a number of alternating layers of amorphous or poly silicon (the thin, black layers in Fig. 9F) and silicon dioxide (the thin, white layers in Fig. 9F). As an alternative, the buried DBR 912 may be composed of alternating layers of silicon nitride and silicon dioxide, or even other alternating layers of different refractive index materials. The alternating layers of different refractive index materials are deposited through a Chemical Vapor Deposition or CVD process. The last layer is preferably silicon dioxide to facilitate wafer bonding with the first wafer. High temperature exposure of the second wafer is avoided. It should be noted that the deposition of this silicon dioxide layer is not essential as wafer bonding is possible between silicon and silicon dioxide. However, in the preferred embodiment, a wafer bond process of silicon dioxide to silicon dioxide is used as this has proven to offer the highest yields.

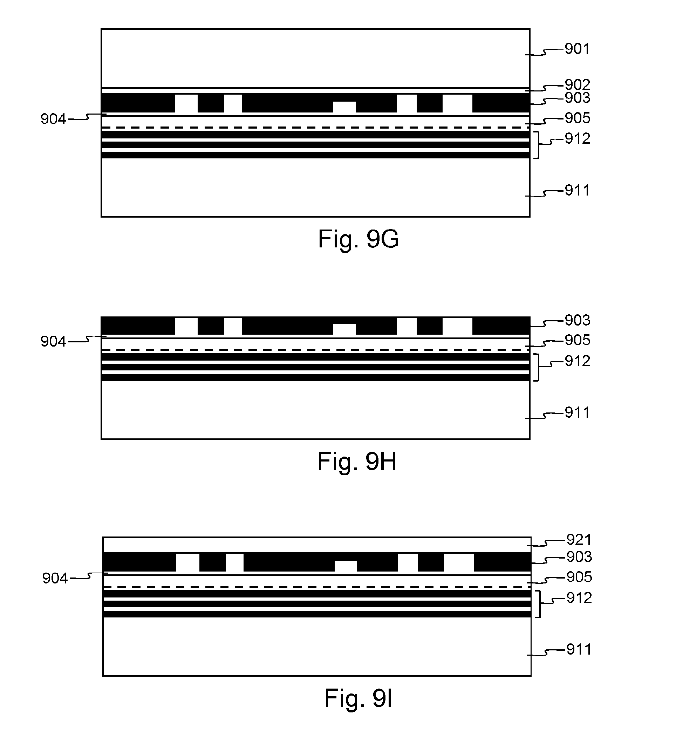

Fig. 9G illustrates bonding of the processed first and second wafers. Thereto, the first processed wafer with layers 901, 902, 903, 904 and 905 is inverted and transferred onto the processed second wafer with layers 911 and 912. Optionally, the underclad layer thickness may be trimmed before transferring the first wafer onto the second. Then, wafer bonding of the first and second wafers is realized at temperatures low enough not to affect the DBR or to cause excess stress in the wafer. In the preferred embodiment, the temperature of 500 °C is not exceeded. The bonding is illustrated by the dashed line in Fig. 9G.

In the following step of the manufacturing process, illustrated by Fig. 9H, the back side or substrate 901 of the first wafer is removed using a two step approach. The majority of silicon material is removed through a back grind process. Then, a wet etch process with high selectivity to the oxide 902 is used to remove the last part of the silicon substrate 901. Finally, the thin oxide layer 902 is removed.

Fig. 9I shows the result of the next step in manufacturing the DBR, underclad, waveguide and overclad platform. An overclad layer 921 is deposited. A thick oxide layer 921 of at least 1.5 micron is grown or deposited. This overclad layer 921 is needed to reduce optical losses.

Again, a cost-efficient buried DBR 912 manufactured through CVD is combined with a high quality waveguide 903 via a transfer process between two wafers. The rest of the wafer scale processing steps may be performed thereafter. These steps may include metallization and providing interconnects.

Although the above described embodiments are manufactured with silicon nitride as material for the high quality waveguide layer, deposited through an LPCVD process, the SOITEC SMARTCUT technique enables to manufacture a high quality monocrystalline silicon waveguide layer that could equally serve as high quality waveguide layer in a photonic circuit or platform according to the invention. Such high quality silicon waveguide can also be transferred onto a CVD based DBR manufactured as part of the first or second wafer, in order to provide a cost-effective platform for a low loss diffractive grating. Hence, a variant of each of the above described embodiments with a silicon waveguide layer applied using the SOITEC SMARTCUT technique could be contemplated.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A process for manufacturing a photonic circuit comprising:
- manufacturing a first layer stack (302, 303, 304, 305) on a first wafer (301), said first layer stack (302, 303, 304, 305) comprising a high quality waveguide layer (303), i.e. a waveguide layer (303) of a material with refractive index above 1.8;
- annealing said high quality waveguide layer (303);
- manufacturing a second layer stack (312) on a second wafer (311);
- manufacturing as part of said first layer stack (302, 303, 304, 305) or as part of said second layer stack (312) a Distributed Bragg Reflector (312) by deposition of alternating layers of different refractive index materials through a Chemical Vapor Deposition or CVD process;
- manufacturing as part of said first layer stack (302, 303, 304, 305) or as part of said second layer stack (312) an underclad layer (305) for said high quality waveguide layer (303) by deposition of a layer (305) with a thickness of at least 1,5 micron of a material with refractive index below 1.5;
- transferring said first layer stack (302, 303, 304, 305) onto said second wafer (311) and bonding said first layer stack (302, 303, 304, 305) and said second layer stack (312);
- manufacturing either before or after said bonding an overclad layer (302) for said high quality waveguide layer (303) by deposition of a layer (302) with a thickness of at least 1.5 micron of a material with refractive index below 1.5; and
- patterning said high quality waveguide layer (303) either before or after said bonding.

2. A process for manufacturing a photonic circuit according to claim 1 wherein silicon nitride is chosen as material for said high quality waveguide layer (303), and manufacturing said high quality waveguide layer (303) further comprises:
- depositing a silicon nitride layer (303) through Low Pressure Chemical Vapor Deposition or LPCVD.

3. A process for manufacturing a photonic circuit according to claim 1 wherein silicon is chosen as material for said high quality waveguide layer, and transferring it onto the layer stack comprising said Distributed Bragg Reflector comprises the SOITEC SMARTCUT technique.

4. A process for manufacturing a photonic circuit according to claim 1, wherein said overclad layer (302) is manufactured before said bonding as part of said first layer stack (302, 303, 304, 305).

5. A process for manufacturing a photonic circuit according to claim 1, wherein said patterning of said high quality waveguide layer (403; 503; 603) is executed after said bonding and said overclad layer (422; 522; 622) is manufactured after said bonding and after said patterning.

6. A process for manufacturing a photonic circuit according to claim 1, wherein said patterning of said high quality waveguide layer (703; 803; 903) is executed before said bonding whereas said overclad layer (721; 821; 921) is manufactured after said bonding.

7. A photonic circuit manufactured using the process according to any of the preceding claims.
